# FASCICULE DE BREVET EUROPEEN

(11) **EP 1 300 194 B1**
(45) Date de publication et mention de la délivrance du brevet: **09.03.2005**
(21) Numéro de dépôt: 01810961.1
(22) Date de dépôt: 03.10.2001
(51) Int. Cl.: B01L 3/00, B01J 19/00

(54) **Dispositif combiné pour le traitement de micro-réseaux biologiques**
Kombinierte Vorrichtung zur Behandlung biologischer Mikromatrizen
Compound device for the treatment of biological micro-arrays

(43) Date de publication de la demande: 09.04.2003
(73) Titulaire: C.S.E.M. CENTRE SUISSE D'ELECTRONIQUE ET DE MICROTECHNIQUE SA, 2007 Neuchâtel (CH)
(72) Inventeur: Sigrist, Hans, 3309 Kernenried (CH); Heitger, Friedrich, 3004 Berne 4 (CH); Faure, Cédric, 2016 Cortaillod (CH)
(74) Mandataire: Gresset, Jean

(56) Documents cités:
- WO-A-01/25137
- WO-A-01/34847
- WO-A-01/41931
- DE-A- 3 915 920
- DE-A- 10 002 920
- US-A- 5 100 775

## Description

La présente invention se rapporte au domaine des micro-réseaux d'échantillons de composés biologiques, biochimiques ou chimiques. Elle concerne, plus particulièrement, un dispositif combiné d'emballage et de test de tels micro-réseaux.

La chimie pharmaceutique et la biochimie, notamment, ont besoin de tester l'activité thérapeutique potentielle de molécules en les mettant au contact de réactifs spécifiques. Par des procédés d'analyse adaptés, il est ensuite possible de mesurer l'efficacité de la molécule testée.

A l'heure actuelle, ce sont des milliers de molécules qu'il faut ainsi tester pour chaque domaine de recherche. Il est donc primordial d'optimiser le déroulement et le coût de ces expériences, sachant qu'étant donné la finesse des analyses impliquées, il n'est pas envisageable de risquer la moindre contamination extérieure.

Pour ces opérations, il est courant d'utiliser des plaques substrats sur lesquelles ont été "imprimés", à l'aide d'outils appropriés, des micro-réseaux d'échantillons de molécules, qu'il est nécessaire, ensuite, de protéger à l'intérieur d'un emballage permettant leur transport et leur stockage dans les meilleures conditions en vue de les tester ultérieurement dans des chambres de réaction qui, en raison du coût élevé des réactifs utilisés, doivent être aussi miniaturisées que possible.

La présente invention a pour but de fournir un dispositif grâce auquel les opérations de stockage, de transport et de mise au contact de réactifs (analyse d'interactions moléculaires et/ou développement) sont largement facilitées, pour un coût très faible et sans risque de contamination.

De façon plus précise, l'invention concerne un dispositif pour le traitement d'une plaque substrat sur laquelle a été déposé au moins un micro-réseau d'échantillons de composés à tester, caractérisé:
- en ce qu'il est formé par l'empilement de deux plaques, l'une inférieure, l'autre supérieure, destiné à être fixé de manière amovible sur la plaque substrat, ces plaques étant rendues solidaires définitivement l'une de l'autre pour former une entité fonctionnelle indépendante,
- en ce que la plaque inférieure est percée d'une ouverture disposée de façon à prendre place au-dessus dudit micro-réseau pour former une chambre de réaction fermée, sur le dessus, par la plaque supérieure, et
- en ce qu'il comporte des moyens pour introduire un réactif dans la chambre, à partir de la plaque supérieure.

De façon avantageuse, le dispositif selon l'invention possède encore les caractéristiques suivantes.
- La plaque supérieure présente, en regard de l'ouverture de la plaque inférieure, une portion en surépaisseur dimensionnée de manière à s'emboîter dans l'ouverture, sans la remplir complètement afin de réduire la hauteur de la chambre de réaction.
- La hauteur de la chambre est comprise entre 0.03 et 0.8 mm.
- L'ouverture de la plaque inférieure a une surface comprise entre 0.1 et 8 cm².
- Lesdits moyens comportent deux embouts formés sur le dessus de la plaque supérieure et communiquant chacun avec une rainure pratiquée dans sa face inférieure et débouchant dans la chambre de réaction, ces rainures formant, avec la face supérieure de la plaque inférieure, des micro-canaux servant l'un à l'injection du réactif dans la chambre et l'autre à son extraction.
- Les micro-canaux ont une section comprise, préférentiellement, entre 500 et 12'000 µm².
- Les plaques inférieure et supérieure sont liées l'une à l'autre par soudage ou collage.
- Le dispositif est fixé sur la plaque substrat par enclipsage.
- Le dispositif comporte des moyens pour assurer l'étanchéité de la chambre de réaction.
- La face inférieure de la plaque inférieure comporte un dépôt de colle faible entourant son ouverture.
- Les plaques inférieure et supérieure sont de dimensions sensiblement égales à celles de la plaque substrat.
- Les plaques inférieure et supérieure sont en un matériau choisi pour ses propriétés physico-chimiques ou sa compatibilité avec les composés à tester.
- Les surfaces destinées à être au contact des composés à tester ont été préalablement passivées afin de réduire leur capacité d'adsorption des composés à tester.

L'invention sera mieux comprise à la lecture de la description qui suit, faite en regard du dessin annexé sur lequel:

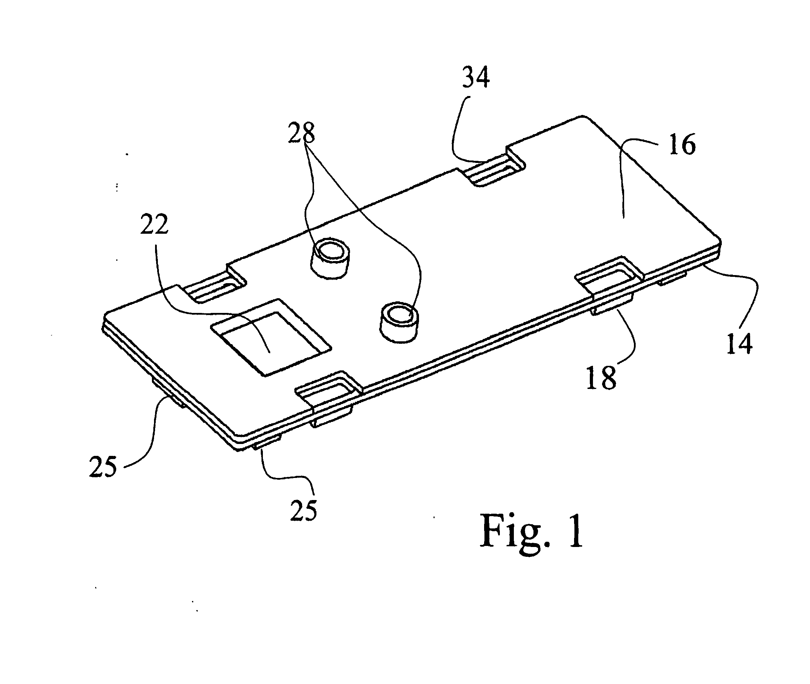

- la figure 1 est une représentation en trois dimensions du dispositif selon l'invention;

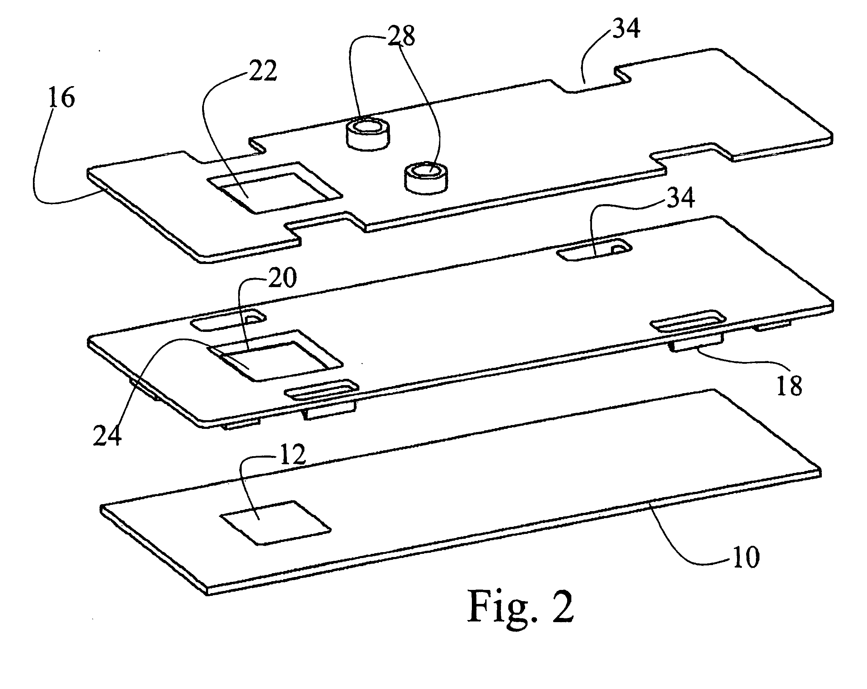

- la figure 2 est une vue éclatée et en trois dimensions du dispositif;

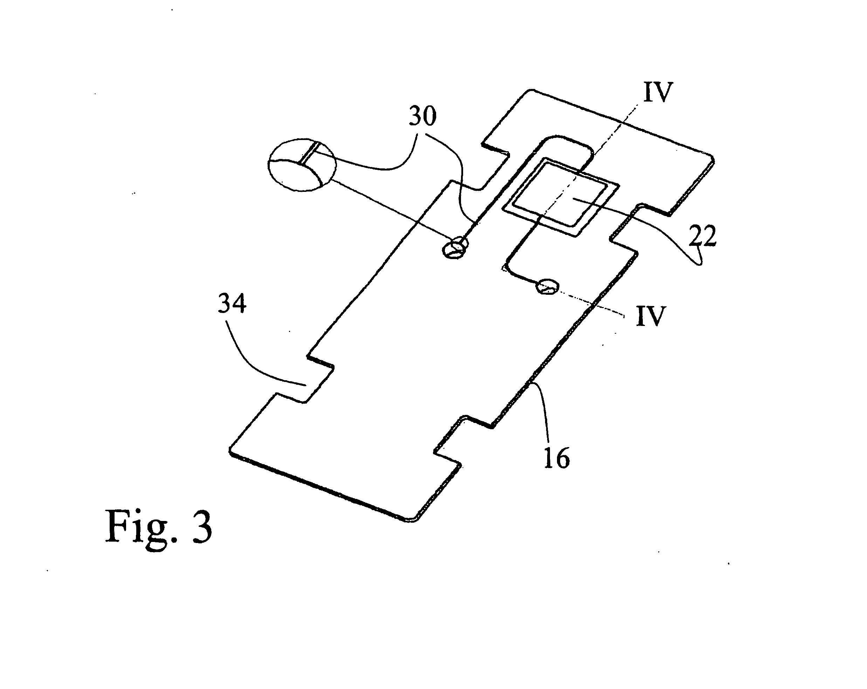

- la figure 3 est une vue de dessous de la plaque supérieure;
- la figure 4 est une vue partielle en coupe du dispositif selon IV-IV, et
- la figure 5 montre plusieurs variantes des moyens d'étanchéité de la chambre de réaction.

Sur les figures, on a représenté en 10 une plaque substrat de dimensions standards, typiquement 25 x 75 x 1.1 mm selon le système métrique, sur l'axe longitudinal de laquelle on a fixé, au préalable, par des techniques bien connues, un micro-réseau 12 d'échantillons de composés biologiques qui peuvent être, notamment, des biomolécules (acides nucléiques, oligonucléotides, protéines, enzymes, anticorps, allergènes, peptides, lectines, récepteurs, carbohydrates, oligo- ou polysaccharrides, lipides, composés de faible poids moléculaire, ...), des assemblages de telles biomolécules, des virus, des cellules, des bactéries, des tissus, etc. A titre indicatif, le micro-réseau 12 a une longueur de 3 à 40 mm et une largeur de 3 à 20 mm. Il peut, selon les applications, comporter une seule surface homogène de composés biologiques ou une pluralité de telles surfaces réparties en réseau.

Le dispositif selon l'invention est destiné à prendre place de manière amovible sur la plaque 10 pour protéger le micro-réseau 12, permettre son transport et son stockage puis faire réagir ses échantillons avec un réactif approprié.

Comme le montrent les figures, le dispositif selon l'invention est constitué d'une plaque inférieure 14 et d'une plaque supérieure 16 accolées, rectangulaires et de dimensions semblables à celles du substrat 10. Elles ont une épaisseur d'environ 0.5 à 2 mm et sont toutes deux réalisées en un matériau rigide ou souple, choisi pour ses propriétés physico-chimiques ou sa compatibilité avec les composés à examiner. De manière avantageuse, le matériau utilisé peut être, à titre indicatif, le silicium, un polymère organique tel que le polyméthyle méthacrylate, un polycarbonate, un polymère multi-composants, etc.

Le contour de la plaque inférieure 14 est muni de plusieurs crochets 18 dirigés vers le bas, destinés à coopérer avec le pourtour de la plaque 10 de manière à solidariser les deux plaques de façon réversible par enclipsage.

Par ailleurs, la plaque inférieure 14 est percée, sur son axe longitudinal, d'une ouverture 20 de forme quelconque, dont la surface est typiquement comprise entre 0.25 et 5 cm² et dont les bords sont biseautés. L'ouverture 20 est disposée et dimensionnée de sorte qu'elle se trouve exactement au dessus du micro-réseau 12 lorsque le dispositif est placé sur le substrat 10.

La plaque supérieure 16 présente, en regard de l'ouverture 20 de la plaque inférieure, un renfoncement 22 dont le fond 24 dépasse de sa face inférieure et est dimensionné de manière à ce qu'il s'emboîte dans l'ouverture 20, sans la remplir complètement, afin de former une chambre de réaction 26 destinée à prendre place au-dessus du réseau 12. Typiquement, la hauteur de cette chambre, déterminée par la profondeur du renfoncement 22, peut être comprise entre 0.05 et 0.8 mm.

La face supérieure de la plaque 16 présente, en outre, deux embouts tubulaires 28 communiquant chacun avec une rainure 30 pratiquée dans la face inférieure de la plaque et débouchant dans la chambre 26, aux extrémités opposées du fond 24 du renfoncement 22. Ces rainures 30 ont une section comprise entre 500 et 12'000 µm² et sont destinées à former des micro-canaux 32 à l'interface des plaques 14 et 16 lorsque celles-ci sont assemblées. Les embouts 28 sont dimensionnés de manière à ce que l'un serve à l'injection d'un réactif liquide dans la chambre 26 et l'autre à son extraction, par exemple à l'aide de seringues.

Les deux plaques 14 et 16 sont liées l'une à l'autre de manière définitive par soudage, collage ou toute autre technique. On remarquera qu'elles présentent chacune des encoches latérales 34 disposées en regard les unes des autres et destinées à la manipulation au moyen de robots. Par ailleurs, la plaque 14 comporte, de préférence, des ergots 25 qui, placés sur son pourtour, assurent le positionnement précis du dispositif sur la plaque substrat 10.

Enfin, la face inférieure de la plaque 14 peut recevoir un dépôt de colle faible (non apparent sur les dessins) entourant l'ouverture 20, puis un film protecteur de plastique amovible (également non représenté) qui recouvre au moins la colle et l'ouverture. La chambre de réaction 26 est, de ce fait, confinée et maintenue propre, indépendamment de la présence de la plaque substrat 10. Plusieurs dispositifs tels que celui décrits peuvent ainsi être empilés, en attente de leur utilisation, sans risque d'aucune contamination.

Il est particulièrement avantageux que les surfaces du dispositif destinées à être au contact des composés biologiques à examiner soient bio-passivées, c'est-à-dire traitées, selon des procédés bien connus de l'homme de métier, à l'aide de produits qui suppriment leur capacité d'adsorption de bio-molécules. De préférence, cette passivation est réalisée à l'aide de polysaccharides photoactivables.

Il est également avantageux que la plaque supérieure 16, au moins, soit transparente, ce qui permet de vérifier visuellement le cheminement du réactif dans le dispositif.

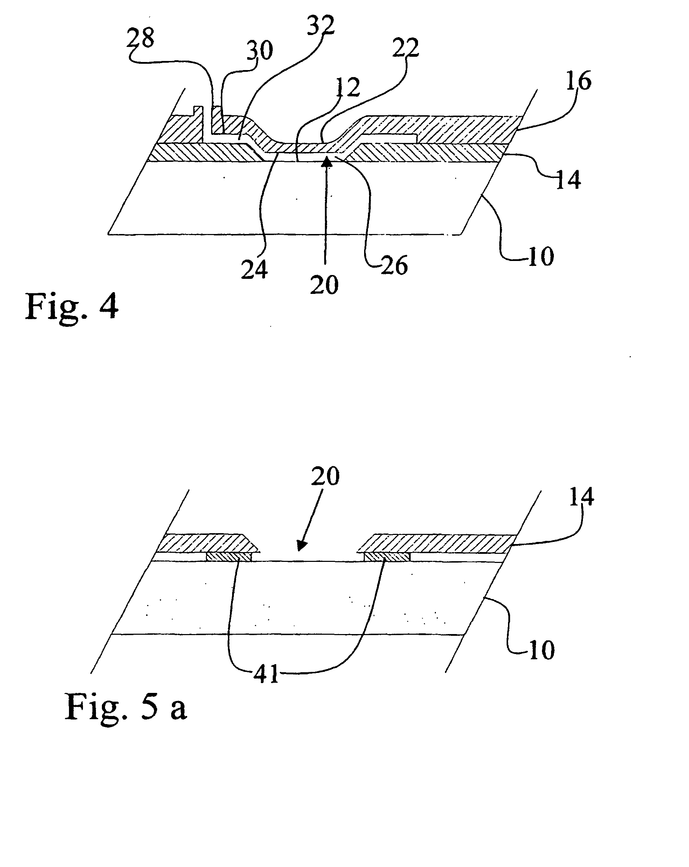

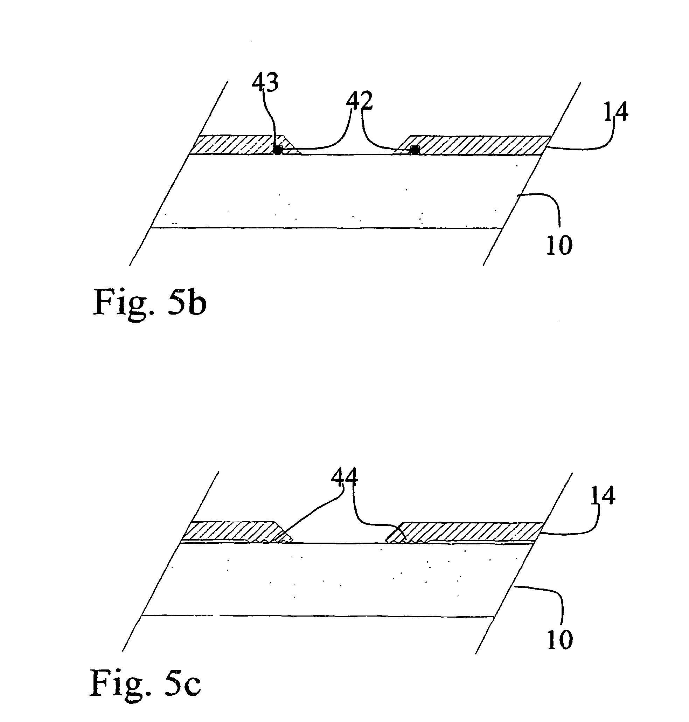

Le dispositif de l'invention doit encore comporter des moyens permettant d'assurer l'étanchéité de la chambre de réaction lorsqu'il est enclipsé sur la plaque substrat 10. Ces moyens d'étanchéité peuvent consister en un adhésif 41 (figure 5.a), de préférence réversible pour permettre le désassemblage de la plaque 10, placé sur la face inférieure de la plaque 14 et entourant l'ouverture 20. Ils peuvent aussi être constitués par un joint torique 42 placé dans une gorge 43 prévue à cet effet (figure 5.b). Enfin, selon une variante avantageuse (figure 5.c), ces moyens d'étanchéité consistent en des micro-structurations concentriques locales 44 sur la partie inférieure de la plaque 14. Ces micro-structurations sont telles qu'elles se déforment sous l'action de la pression exercée par le dispositif lors de son enclipsage sur la plaque substrat. Typiquement, ces micro-structurations peuvent avoir une hauteur de 10 µm et un pas de 2 à 5 µm. L'intérêt de cette variante est qu'elle peut être réalisée par la même méthode de fabrication que la plaque 14 elle-même, par exemple par moulage par injection, ne requérant ainsi ni composant ni étape de fabrication supplémentaire.

L'utilisation du dispositif selon l'invention est très simple. La plaque substrat 10 ayant reçu son micro-réseau 12 de biomolécules à tester, l'opérateur doit, éventuellement, juste retirer le film plastique de protection recouvrant l'adhésif sur la face inférieure de la plaque 14 et enclipser le dispositif sur la plaque 10. La chambre de réaction 26 se trouve ainsi sur le micro-réseau 12, les moyens d'étanchéité autour de l'ouverture 20 garantissant l'étanchéité de la chambre de réaction.

Le tout peut alors être stocké et transporté aisément et de manière sûre.

Lorsqu'il s'agit, ensuite, de procéder à un test, un réactif approprié est injecté dans l'un des embouts 28 et circule par le micro-canal correspondant 32 jusqu'à la chambre 26 dans laquelle il réagit avec les échantillons de biomolécules du micro-réseau 12 avant d'être évacué par l'autre micro-canal et l'autre embout.

Il suffit alors de désolidariser le dispositif de la plaque substrat 10 pour disposer d'un micro-réseau "développé" prêt à être examiné, par exemple de manière optique, ou à recevoir un traitement de surface approprié. Le dispositif peut finalement soit être jeté, soit être associé à une autre plaque substrat après nettoyage.

La présente description a été faite en se référant à une plaque substrat ne comportant qu'un seul micro-réseau de composés biologiques mais il va de soi que le dispositif selon l'invention peut être utilisé avec des réseaux comportant une pluralité (jusqu'à 10) de micro-réseaux, ces derniers pouvant être utilisés simultanément ou séquentiellement. Dans ce cas, le dispositif peut être doté d'embouts et/ou de micro-canaux additionnels permettant toutes les interconnexions désirées.

Il est évident, par ailleurs, que la fixation du dispositif sur la plaque substrat peut se faire par tout moyen assurant un assemblage amovible, par exemple à l'aide d'une pince ou d'un clip.

Ainsi est réalisé un dispositif miniaturisé qui, servant à la fois d'emballage et de chambre de réaction pour le micro-réseau, simplifie toutes les manipulations, réduit au minimum les risques de contamination et est d'un coût très faible.

## Revendications

1. Dispositif pour le traitement d'une plaque substrat (10) sur laquelle a été déposé au moins un micro-réseau (12) d'échantillons de composés à tester, **caractérisé:**
- **en ce qu'**il est formé par l'empilement de deux plaques, l'une inférieure (14), l'autre supérieure (16), destiné à être fixé de manière amovible sur la plaque substrat, lesdites plaques étant solidarisées définitivement pour former une entité fonctionnelle indépendante,
- **en ce que** la plaque inférieure (14) est percée d'une ouverture (20) disposée de façon à prendre place au-dessus dudit micro-réseau pour former une chambre de réaction (26) fermée, sur le dessus, par la plaque supérieure (16), et
- **en ce qu'**il comporte des moyens pour introduire un réactif dans ladite chambre, à partir de la plaque supérieure.

2. Dispositif selon la revendication 1, **caractérisé en ce qu'**il comporte, en outre, des moyens d'étanchéité (41, 42, 44) disposés autour de ladite ouverture (20) et destinés à assurer l'étanchéité de la chambre de réaction (26) lorsqu'il est assemblé sur la plaque substrat (10).

3. Dispositif selon la revendication 1 ou 2, **caractérisé en ce que** la plaque supérieure (16) présente, en regard de l'ouverture (20) de la plaque inférieure (14), une portion en surépaisseur (24) dimensionnée de manière à s'emboîter dans l'ouverture (20), sans la remplir complètement afin de réduire la hauteur de la chambre de réaction (26).

4. Dispositif selon la revendication 3, **caractérisé en ce que** la hauteur de ladite chambre (26) est comprise entre 0.03 et 0.8 mm.

5. Dispositif selon la revendication 1, **caractérisé en ce que** ladite ouverture (20) a une surface comprise entre 0.1 et 8 cm².

6. Dispositif selon la revendication 1, **caractérisé en ce que** lesdits moyens comportent deux embouts (28) formés sur le dessus de la plaque supérieure (16) et communiquant chacun avec une rainure (30) pratiquée dans sa face inférieure et débouchant dans la chambre de réaction (26), lesdites rainures formant, avec la face supérieure de la plaque inférieure, des micro-canaux (32) servant l'un à l'injection du réactif dans la chambre et l'autre à son extraction.

7. Dispositif selon la revendication 6, **caractérisé en ce que** lesdits micro-canaux (30) ont une section comprise entre 500 et 12'000 µm².

8. Dispositif selon la revendication 1, **caractérisé en ce que** les plaques inférieure (14) et supérieure (16) sont liées l'une à l'autre par soudage ou collage.

9. Dispositif selon la revendication 1, **caractérisé en ce qu'**il est fixé sur la plaque substrat (10) par enclipsage.

10. Dispositif selon la revendication 1, **caractérisé en ce que** la face inférieure de la plaque inférieure (14) comporte un dépôt de colle faible entourant son ouverture (20).

11. Dispositif selon la revendication 1, **caractérisé en ce que** les plaques inférieure (14) et supérieure (16) sont en un matériau choisi pour ses propriétés physico-chimiques ou sa compatibilité avec les composés à tester.

12. Dispositif selon la revendication 1, **caractérisé en ce que** les surfaces destinées à être au contact des composés à tester ont été préalablement passivées afin de réduire leur capacité d'adsorption desdits composés.

13. Dispositif selon la revendication 2, **caractérisé en ce que** lesdits moyens d'étanchéité consistent en un adhésif réversible (41).

14. Dispositif selon la revendication 2, **caractérisé en ce que** lesdits moyens d'étanchéité consistent en un joint (42) placé dans une gorge (43) sur la face externe de ladite plaque inférieure (14).

15. Dispositif selon la revendication 2, **caractérisé en ce que** lesdits moyens d'étanchéité consistent en des micro-structurations (44) formant des excroissances concentriques et déformables sur la face externe de ladite plaque inférieure (14).

## Patentansprüche

1. Vorrichtung zur Behandlung einer Substratplatte (10) auf welcher mindestens ein Mikronetzwerk (12) von zu prüfenden chemischen Verbindungsproben abgelagert wurde, **dadurch gekennzeichnet:**
- **dass** diese Vorrichtung durch ein aus einer unteren (14) und einer für die lösbare Befestigung auf der Substratplatte vorgesehenen oberen Platte (16) bestehendes, übereinander gestapeltes Plattenpaar gebildet wird, dessen beide besagten Platten endgültig zusammengefügt sind, um eine unabhängige Funktionseinheit zu verkörpern,
- **dass** die untere Platte (14) eine durchgängige Öffnung (20) aufweist, die so angeordnet ist, dass sie über dem besagten Mikronetzwerk zu liegen kommt, um eine oben durch die obere Platte (16) abgeschlossene Reaktionskammer (26) zu bilden, und
- **dass** diese Vorrichtung mit Mitteln versehen ist, um von der oberen Platte aus ein Reagens in die besagte Kammer einzubringen.

2. Vorrichtung nach Patentanspruch 1, **dadurch gekennzeichnet, dass** diese im Weiteren mit um die besagte Öffnung (20) herum angeordneten Abdichtungsmitteln (41, 42, 44) versehen ist, um bei ihrer Befestigung auf der Substratplatte (10) die Dichtigkeit der Reaktionskammer (26) zu gewährleisten.

3. Vorrichtung nach Patentanspruch 1 oder 2, **dadurch gekennzeichnet, dass** die obere Platte (16) gegenüber der Öffnung (20) der unteren Platte (14) einen verdickten Bereich (24) aufweist, der so bemessen ist, dass er, ohne die Öffnung (20) vollständig auszufüllen, in diese hineinpasst, um die Höhe der Reaktionskammer (26) zu verringern.

4. Vorrichtung nach Patentanspruch 3, **dadurch gekennzeichnet, dass** die Höhe der besagten Kammer (26) im Bereich von 0,03 bis 0,8 mm liegt.

5. Vorrichtung nach Patentanspruch 1, **dadurch gekennzeichnet, dass** die besagte Öffnung (20) eine im Bereich von 0,1 bis 8 cm2 liegende Fläche umgrenzt.

6. Vorrichtung nach Patentanspruch 1, **dadurch gekennzeichnet, dass** die besagten Mittel zwei an der Oberfläche der oberen Platte (16) ausgebildete, jeweils mit einer in deren Unterfläche eingearbeiteten, in die Reaktionskammer (26) mündenden Nut (30) kommunizierende Stutzen (28) umfassen, wobei die besagten Nuten zusammen mit der Oberfläche der unteren Platte Mikrokanäle (32) bilden, wovon der eine zur Einspritzung des Reagens in die Kammer und der andere zu dessen Abzug dient.

7. Vorrichtung nach Patentanspruch 6, **dadurch gekennzeichnet, dass** die besagten Mikrokanäle (30) einen im Bereich von 500 bis 12'000 µm2 liegenden Querschnitt aufweisen.

8. Vorrichtung nach Patentanspruch 1, **dadurch gekennzeichnet, dass** die untere (14) und die obere Platte (16) durch Verschweißung oder Verklebung miteinander verbunden sind.

9. Vorrichtung nach Patentanspruch 1, **dadurch gekennzeichnet, dass** diese auf der Substratplatte (10) durch Einschnappen befestigt ist.

10. Vorrichtung nach Patentanspruch 1, **dadurch gekennzeichnet, dass** die Unterseite der unteren Platte (14) um die Öffnung (20) herum mit einem schwachen Klebstoff beschichtet ist.

11. Vorrichtung nach Patentanspruch 1, **dadurch gekennzeichnet, dass** die untere (14) und die obere Platte (16) aus einem aufgrund seiner physikalisch-chemischen Eigenschaften oder seiner Verträglichkeit mit den zu prüfenden chemischen Verbindungen gewählten Material bestehen.

12. Vorrichtung nach Patentanspruch 1, **dadurch gekennzeichnet, dass** die mit den zu prüfenden chemischen Verbindungen in Berührung kommenden Flächen zur Verringerung ihrer Adsorptionsfähigkeit gegenüber den besagten chemischen Verbindungen vorgängig passiviert wurden.

13. Vorrichtung nach Patentanspruch 2, **dadurch gekennzeichnet, dass** die besagten Abdichtungsmittel aus einem reversiblen Klebstoff (41) bestehen.

14. Vorrichtung nach Patentanspruch 2, **dadurch gekennzeichnet, dass** die besagten Abdichtungsmittel aus einer in eine Nut (43) an der Außenseite der besagten unteren Platte (14) eingesetzten Dichtung (42) bestehen.

15. Vorrichtung nach Patentanspruch 2, **dadurch gekennzeichnet, dass** die besagten Abdichtungsmittel aus an der Außenseite der besagten unteren Platte (14) ausgebildeten Mikro-Strukturierungen (44) in Form von konzentrischen und deformierbaren Ausstülpungen bestehen.

## Claims

1. A device for the treatment of a substrate plate (10) on which has been deposited at least one micro-network (12) of samples of compounds to be tested, **characterized:**
- **in that** it is formed by the superposing of two plates, one lower (14), the other upper (16), intended to be attached to and detachable from the substrate plate, said plates being rigidly and definitively joined together to form an independant functional entity,
- **in that** the lower plate (14) has an aperture (20) designed to be located above said micro-network to form a reaction chamber (26) that is sealed, at the top, by the upper plate (16), and
- **in that** it comprises means for introducing a reagent into said chamber, from the upper plate.

2. The device of claim 1, containing, in addition, sealing means (41, 42, 44) deployed around said aperture (20) and intended to hermetically seal the reaction chamber (26) when it is assembled on the substrate plate (10).

3. The device of claim 1, wherein the upper plate (16) has, opposite to the aperture (20) in the lower plate (14), an extra-thick portion (24) dimensioned so that it fits into said aperture (20), without filling it completely, in order to reduce the height of the reaction chamber (26).

4. The device of claim 3, wherein the height of said chamber (26) is between 0.03 and 0.8 mm.

5. The device of claim 1, wherein said aperture (20) has a surface area of between 0.1 and 8 cm².

6. The device of claim 1, wherein said introducing means comprises two connectors (28) formed on the top of the upper plate (16), each communicating with a groove (30) made in its lower surface and ending in the reaction chamber (26), said grooves forming, with the upper surface of the lower plate, micro-channels (32), one of which is used to inject said reagent into the chamber, the other to extract it.

7. The device of claim 6, wherein said micro-channels (30) have a cross-section of between 500 and 12,000 µm².

8. The device of claim 1, wherein said lower (14) and upper (16) plates are fused or bonded together.

9. The device of claim 1, **characterized in that** it is attached to the substrate plate (10) by means of clips.

10. The device of claim 1, wherein the underside of the lower plate (14) contains a deposit of weak adhesive around its aperture (20).

11. The device of claim 1, wherein said lower (14) and upper (16) plates are made from a material chosen for its physico-chemical properties or its compatibility with the compounds to be tested.

12. The device of claim 1, wherein the surfaces intended to come into contact with the compounds to be tested have previously been passivated in order to reduce their capacity to adsorb said compounds.

13. The device of claim 2, wherein said sealing means consists of a reversible adhesive (41).

14. The device of claim 2, wherein said sealing means consists of a seal (42) placed in a groove (43) on the outer surface of the said lower plate (14).

15. The device of claim 2, wherein said sealing means consists of microstructures (44) forming concentric and deformable excrescences on the outer surface of the said lower plate (14).
